# EUROPEAN PATENT SPECIFICATION

(11) **EP 2 376 545 B1**
(45) Date of publication and mention of the grant of the patent: **16.10.2013**
(21) Application number: 09796975.2
(22) Date of filing: 28.12.2009
(51) Int. Cl.: C08F 218/10, C08F 220/14, C08F 220/18

(54) **ALKYL METHACRYLATE/ALKYL ACRYLATE COPOLYMERS USED AS SIZING FOR REINFORCING FIBER**
ALKYLMETHACRYLAT/ALKYLACRYLAT-COPOLYMERE, DIE ALS SCHLICHTE FÜR VERSTÄRKUNGSFASER VERWENDET WERDEN
COPOLYMÈRES DE MÉTHACRYLATE D'ALKYLE/ACRYLATE D'ALKYLE UTILISÉS EN TANT QU'ENCOLLAGE POUR FIBRE DE RENFORCEMENT

(30) Priority: 29.12.2008 US 203847 P
(43) Date of publication of application: 19.10.2011
(73) Proprietor: Celanese Emulsions GmbH, 65843 Sulzbach (Taunus) (DE)
(72) Inventor: VAN BOXTEL, Hendrikus, 60438 Frankfurt am Main (DE)
(74) Representative: von Kreisler Selting Werner
(86) International application number: PCT/EP2009/009281
(87) International publication number: WO 2010/076006

(56) References cited:
- EP-A1- 0 486 110
- EP-A2- 1 634 897
- US-A1- 2004 166 313

## Description

### Claim for Priority

This application is based on United States Provisional Patent Application No. 61/203,847 of the same title, filed December 29, 2008. The priority of Untied States Provisional Patent Application No. 61/203,847 is hereby claimed.

### Field of the Invention

This invention relates to the preparation and use of polymers comprising an alkyl methacrylate such as methyl methacrylate (MMA), an alkyl acrylate such as butyl acrylate (BA), and an unsaturated carboxylic acid such as methacrylic acid, generally with at least one additional comonomer selected from, for example, vinyl esters of α-monosubstituted fatty acids, such as vinyl 2-ethyl hexanoate monomer, vinyl esters of a neoalkanoic acid such as VeoVa™ 10, vinyl esters of an aromatic carboxylic acid such as vinyl benzoate and so forth. Such polymers are particularly useful as sizing for fibers used to reinforce plastics.

### Background of the Invention

The use of MMA and BA type monomers tends to improve the mechanical properties, chemical resistance and water resistance of coating films after drying according to EP 0 486 110 which discloses copolymer latexes of methylmethacrylate, butylacrylate, versatic acid esters and acrylic acid. *See* P. 3. The interpolymer is derived from a starting comonomer mixture comprising a) methylmethacrylate; b) butylacrylate; c) a vinyl ester of one or more saturated monocarboylic acids such as VeoVa 10; and d) a stabilizing monomer in an amount ranging from 0.5 to 5.0 wt%. One of the preferred embodiments is comprised of the following comonomer starting mixture: a) from 15 to 65 wt% methylmethacrylate; b) from 0.5 to 20 wt% butylacrylate; c) from 20 to 85 wt% VeoVa™. 10; and d) from 0.5 to 2 wt% of acrylic acid.

WO 99/42500 to Swarup et al. discloses polymer compositions derived from vinyl neo C₉₋C₁₃ carboxylic acid esters which are polymerized with ethylenically unsaturated comonomers such as acrylic acid esters and vinyl acetate. The polymer compositions are used for applications such as architectural, direct to metal coatings, and marine coatings and transportation maintenance applications.

Japanese Patent Application Publication No. 2002-136815 to Tomohiko et al. discloses a filter medium for an air filter wherein the air filter medium consists essentially of glass fiber. A binder such as a vinyl polymerization resin can be used wherein the binder is comprised of a vinyl ester monomer and a VeoVa monomer. Supplementary monomers such as methyl methacrylate (MMA), ethyl methacrylate (EMA), methyl acrylate (MA), ethyl acrylate (EA), n-butyl acrylate (BA), 2-ethylhexyl acrylate (2EHA), can be also used. In addition, in order to carry out copolymerization to these, acrylonitrile (AN), styrene, vinyl acetate (VAc), 1,3- butadiene (BD), can be utilized.

Japanese Patent Application Publication No. 2004-217724 to Seiji et al. discloses an aqueous emulsion which has excellent water resistance, polymerization stability and storage stability and a process to prepare the emulsion polymer. The vinyl ester monomer that can be used is vinyl acetate with the addition of ethylene. The emulsion can be used as an adhesive for paper coatings, general woodwork, and as a binder for nonwoven products.

United States Patent Application Publication No. 2002/0065361 to Tanimoto et al. discloses a polyvinyl ester resin emulsion having a high viscosity and good water resistance. The emulsion is produced in a method of polymerizing a vinyl ester monomer in the presence of polyvinyl alcohol serving as the protective colloid and in the presence of a water-insoluble, hydroxyl-group containing compound, and can be used as an adhesive that can be readily formed in to transparent films. Vinyl esters that can be used in the invention include vinyl formate, vinyl acetate, vinyl propionate, and vinyl pivalate. Ethylene can be added to the emulsion in the range of 3-35 wt% to improve water resistance and heat resistance.

EP 1 580 244 to Faust et al. discloses a water-based bicomponent wood adhesive having improved heat resistance and extended pot life. The adhesive is comprised of vinyl acetate and N-methylolacrylamide as a cross-linking agent and also including an aromatic and/or cyclo aliphatic monomer, such as 2-phenoxy ethyl acrylate and/or isobornyl methacrylate, and methyl methacrylate. Additional vinyl esters that can be used are vinyl formate, vinyl isobutyrate, vinyl pivalate, vinyl 2-ethylhexanoate, vinyl esters of saturated, branched monocarboxylic acids having 9 to 10 carbon atoms in the acid radical, such as VeoVa9 or VeoVa10, vinyl esters of relatively long-chain, saturated or unsaturated fatty acids, such as, for example, vinyl laurate, vinyl stearate and vinyl esters of benzoic acid and substituted derivatives of benzoic acid, such as vinyl p-tertbutylbenzoate.

It is an object of the invention to provide emulsion copolymers comprising methyl methacrylate and butyl acrylate, optionally with additional monomer units to improve composite properties.

### Summary of the Invention

The present invention is directed, in part, to novel polymer compositions comprised of at least an alkyl methacrylate such as methyl methacrylate and an alkyl acrylate such as n-butyl acrylate and an C₃-C₆ unsaturated carboxylic acid with at least one additional monomer. The polymers are particularly useful for sizing fibers used in composites such as fiber reinforced thermoplastics (FRTP) and other polymer composites. There is thus provided a polymer composite comprising a thermoplastic or thermosetting matrix resin and a reinforcing fiber sized with a polymer composition obtainable by reacting: a) 5-90 pphwm of at least one alkyl methacrylate having a Tg of more than 40°C; and b) 5-50 pphwm of at least one alkyl acrylate having a Tg of less than 0°C; and c) 0.1-20 pphwm of at least one C₃-C₆ unsaturated carboxylic acid; and d) at least one further comonomer selected from the group comprising: (i) 10-60 pphwm of at least one vinyl ester of α-monosubstituted fatty acids, such as vinyl 2-ethyl hexanoate, (ii) 5-50 pphwm of vinyl esters of an aromatic carboxylic acid, such as vinyl benzoate, and (i) other comonomers, such as α-olefins.

Preferred ranges of vinyl ester of α-monosubstituted fatty acid can include from 15-50 pphwm or from 20-40 pphwm. Preferred ranges of vinyl esters of an aromatic carboxylic acid can include from 10-40 pphwm or from 15-30 pphwm; while in many compositions, 0.5-10 or 1-10 pphwm of at least one C₃-C₆ unsaturated carboxylic acid is used.

In one prefered embodiment, the copolymer is obtainable by reacting: a) 5-50 pphwm methyl methacrylate; b) 5-50 pphwm of butyl acrylate; c) 1-10 pphwm of methacrylic acid or acrylic acid; d) 15-40 pphwm of vinyl 2-ethyl hexanoateand 5-30 pphwm of vinyl benzoate.

Further details will become apparent from the discussion which follows.

### Detailed Description of the Invention

The invention is described in detail below with reference to several embodiments and numerous examples. Such discussion is for purposes of illustration only. Modifications to particular examples within the spirit and scope of the present invention will be readily apparent to one of skill in the art. Terminology used herein is given its ordinary meaning consistent with the exemplary definitions herein.

The abbreviation "pphwm" refers to parts per hundred weight monomer based on monomer supplied to the reaction medium unless otherwise indicated.

The terminology "alkyl (meth)acrylate" and similar terminology refers to alkyl acrylates and alkyl methacrylates, typically C₁-C₁₂ alkyl such as n-butyl acrylate and so forth.

When we refer to the Tg of a monomer, we refer to the Tg of a homopolymer of that material.

Other terminology and abbreviations are noted below.

Copolymers of this invention include alkyl methacrylate, alkyl acrylate, and C₃-C₆ unsaturated carboxylic acid monomer units in many embodiments.

Additional monomers employed in the inventive copolymers include vinyl esters of aromatic carboxylic acids, vinyl esters of α-monosubstituted fatty acids such as vinyl 2-ethylhexanoate (V2EH) and vinyl esters of neoalkanoic acids.

### Vinyl esters of aromatic carboxylic acids

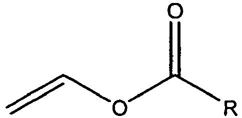

Vinyl benzoate is where R = phenyl. R can be any C₆-C₁₂ aromatic moiety such as naphthalyl, biphenyl whose rings may be further substituted with halogen, alkyl, nitro, amine, and so forth. Further description of suitable aromatic carboxylic acid esters is found in WO 2005/098200.

Monomer units from vinyl esters of α-monosubstituted fatty acids such as vinyl 2-ethylhexanoate (V2EH) are provided in some embodiments: 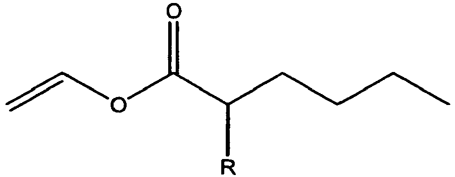 Vinyl 2-ethylhexanoate is where R = ethyl

More generally, any α-monosubstituted alkanoic acid vinyl ester may be used, for example, alkanoic acid esters of the formula: 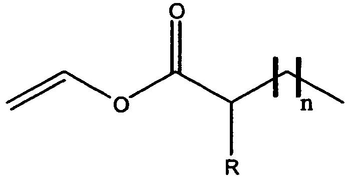 R = straight chain, branched or cyclic alkyl groups, for example, 2-alkylbutanoic acid (n=1) or 2-alkylpropanoic acid is where n=0; n is suitably 2-20. Suitable branched acid alkanoates may also be found in United States Patent No. 5,371,137 to Blincow et al..

Optional additional monomers such as α-olefin monomers, functional monomers and so forth can also be included if so desired. Examples of suitable α-olefin monomers include ethylene, propylene, α-butylene, α-pentylene, α-hexylene, α-octylene and so forth.

The inventive copolymers may be made by a variety of techniques by which addition polymers are made including by bulk, solution, suspension and emulsion processes as is described in the Kirk-Othmer Encyclopedia of Chemical Technology, 4th Ed., Vol. 24, pp. 954-963 (Wiley 1996). The preparation of the inventive compositions can be carried out using continuous or discontinuous processes of free-radical emulsion polymerization. The polymerization may be conducted with the assistance of customary reaction vessels such as loop or stirred reactors. Preference is given to using discontinuous processes such as batch, combined batch/feed stream, pure feed stream processes or feed stream processes onto nucleating particles.

In these processes, water-soluble and/or oil-soluble initiator systems such as peroxodisulfates, azo compounds, hydrogen peroxide, organic hydroperoxides or dibenzoyl peroxide are employed. These may be used either by themselves or in combination with reducing compounds such as Fe(II) salts, sodium pyrosulfite, sodium hydrogen sulfite, sodium sulfite, sodium dithionite, sodium formaldehyde-sulfoxylate, ascorbic acid, as a redox catalyst system. The emulsifiers, and /or where appropriate, protective colloids, additives and/or auxiliaries may be added before, during or after the polymerization. Examples of emulsifiers include alkyl aryl polyglycol ethers and alkyl polyglycol ethers each preferably having from 8 to 50 mol of ethylene oxide units per molecule, block copolymers of ethylene oxide with propylene oxide, alkylsulfonates or alkyarylsulfonates, alkyl sulfates, alkyl and aryl ether sulfates and phosphates each having preferably from 8 to 18 carbon atoms in the lipophilic part and up to 50 ethylene oxide or propylene oxide units in the hydrophilic part, and also monoesters or diesters of sulfosuccinic acid or alkylphenols each having preferably from 8 to 18 carbon atoms in the alkyl radical. A preferred type of emulsifier does not contain linear alkyl phenol units in the lipophilic part.

Representative of alkyl acrylates and methacrylates to be used to make the polymers of the invention include wherein the alkyl group contains 1-12 or 1-10 carbon atoms. Esters of acids such as butenoic, maleic, fumaric, itaconic may also be used as comonomers. Representative of other esters which have an ethylenic unsaturation and are preferred include vinyl formate, vinyl versatate. The polymer backbone in the acrylic ester latexes can be either hydrophilic or hydrophobic and it can comprise polymerized soft monomers and/or hard monomers. The soft and hard monomers are monomers which, when polymerized, produce soft or hard polymers, or polymers in-between. Preferred soft acrylic ester monomers are selected from alkyl acrylates containing 2 to 8 carbon atoms in the alkyl group and include ethyl acrylate, propyl acrylate, n-butyl acrylate, and 2-ethylhexyl acrylate. The hard acrylic ester monomers are selected from alkyl methacrylates containing up to 3 carbon atoms in the alkyl group and from non-acrylic monomers such as styrene and substituted styrenes, acrylonitrile, vinylchloride, and generally any compatible monomer the homopolymer of which has a Tg above 50°C. Preferred acrylic ester monomers are selected from alkyl methacrylates containing 1 to 12 carbon atoms in the alkyl group, especially methyl methacrylate. *See* United States Patent No. 5,021,529 to Garrett*.*

The inventive copolymers comprising alkyl acrylate and alkyl methacrylate units further comprise ethylenically unsaturated, ionic monomer units, for example units which bear at least one carboxylic acid, sulfonic acid, phosphoric acid or phosphonic acid group directly adjacent to the double bond of the respective monomer, or else are bonded thereto via a spacer. Examples include:
α,β-unsaturated C₃-C₈-monocarboxylic acids, preferably α,β-unsaturated C₃-C₆ monocarboxylic acids, α,β-unsaturated C5-C₈-dicarboxylic acids and anhydrides thereof, and monoesters of α,β-unsaturated C₄-C₈-dicarboxylic acids.

Preference is given to α,β-unsaturated C₃-C₆ monocarboxylic acids, for example acrylic acid, methacrylic acid, and crotonic acid. The anhydrides thereof and/or unsaturated dicarboxylic acids, for example maleic acid, fumaric acid, itaconic acid and citraconic acid and the monoesters thereof with C₁-C₁₂-alkanols such as monomethyl maleate and mono-n-butyl maleate may also be employed. Further preferred ethylenically unsaturated ionic monomers are ethylenically unsaturated sulfonic acids, for example vinylsulfonic acid, 2-acrylamido-2-methylpropanesulfonic acid, 2-acryloyloxy- and 2-methacryloyloxyethanesulfonic acid, 3-acryloyloxy- and 3-methacryloyloxypropanesulfonic acid and vinyl-benzenesulfonic acid, and ethylenically unsaturated phosphonic acids, for example vinylphosphonic acid.

In addition, as well as the acids mentioned, it is also possible to use the salts thereof, preferably the alkali metal salts thereof or the ammonium salts thereof and especially the sodium salts thereof, for example the sodium salts of vinylsulfonic acid and of 2-acrylamidopropanesulfonic acid.

The ethylenically unsaturated free acids mentioned are present in aqueous solution at pH 11 predominantly in the form of their conjugate bases in anionic form and can, like the salts mentioned, be referred to as anionic monomers.

Also suitable are epoxide-functional comonomers such as glycidyl methacrylate and glycidyl acrylate. Further examples are silicon-functional comonomers such as acryloxy-propyltri(alkoxy)silanes and methacryloxypropyltri(alkoxy)silanes, vinyltrialkoxysilanes and vinylmethyldialkoxysilanes, with alkoxy groups which can be present being, for example, methoxy, ethoxy and ethoxypropylene glycol ether radicals. Mention may also be made of useful monomers having hydroxy or CO groups, for example, hydroxyalkyl methacrylates and acrylates such as hydroxyethyl, hydroxypropyl or hydroxybutyl acrylate or methacrylate and also compounds such as diacetoneacrylamide and acetylacetoxyethyl acrylate or methacrylate, *see* United States Patent Application Publicaton No. 2007/0112117 to Weitzel*.*

Futhermore, there is provided in accordance with the invention a polymer composition obtainable by reacting : a) 10-90 pphwm of alkyl methacrylate monomer units having a Tg of more than 40°C; b) 5-50 pphwm of alkyl acrylate monomer units having a Tg of less than 0°C; c) 5-50 pphwm of monomer units from vinyl esters of neoalkanoic acid; d) 1-20 pphwm C₃-C₆ unsaturated carboxylic acid monomer units; wherein said polymer composition is synthesized and composed so as to be suitable for sizing reinforcing fibers used in thermoplastic or thermosetting polymer composites. The alkyl methacrylate monomer units are typically methyl methacrylate monomer units, while the alkyl acrylate monomer units may be butyl acrylate monomer units.

Another composition is obtainable by reacting: a) 20-80 pphwm of methyl methacrylate monomer units; b) 5-50 pphwm of butyl acrylate monomer units; c) 15-45 pphwm of monomer units from vinyl esters of neoalkanoic acid; and d) 1-10 pphwm of methacrylic acid or acrylic acid monomer units.

Still another aspect of the invention is directed to a polymer composite comprising a thermoplastic or thermosetting matrix resin and a reinforcing fiber sized with a polymer composition obatainable by reacting: a) 10-90 pphwm of alkyl methacrylate monomer units having a Tg of more than 40°C; b) 5-50 pphwm of alkyl acrylate monomer units having a Tg of less than 0°C; c) 5-50 pphwm of of monomer units from vinyl esters of neoalkanoic acid; d) 1-20 pphwm of C₃-C₆ unsaturated carboxylic acid monomer units, wherein the reinforcing fiber is a glass fiber or other mineral fiber.

Still yet another aspect of the invention is a a reinforcing fiber sized with a polymer obtainable by reacting: a) 10-90 pphwm of alkyl methacrylate monomer units having a Tg of more than 40°C; b) 5-50 pphwm of alkyl acrylate monomer units having a Tg of less than 0°C; c) 5-50 pphwm of of monomer units from vinyl esters of neoalkanoic acid; d) 1-20 pphwm of C₃-C₆ unsaturated carboxylic acid monomer units, wherein the reinforcing fiber is a glass fiber or other mineral fiber.

Any of the foregoing polymer compositions or those described hereinafter may be used in the manufacture of a polymer composite with reinforcing fiber or appled to a glass or mineral fiber as sizing.

One preferred composition is obtainable by reacting: a) 10-60 pphwm of alkyl methacrylate monomer units having a Tg of more than 40°C; b) 5-50 pphwm of alkyl acrylate monomer units having a Tg of less than 0°C; c) 10-60 pphwm of of monomer units from vinyl esters of α-monosubstituted fatty acids; d) 5-50 pphwm of monomer units from vinyl esters of an aromatic carboxylic acid; and e) 1-20 pphwm of C₃-C₆ unsaturated carboxylic acid monomer units. The α-monosubstituted monomer units may be vinyl 2-ethyl hexanoate monomer units and the carboxylic acid vinyl ester monomer units may be vinyl benzoate monomer units; while the other components are as described above.

A further aspect of the invention is a polymer composition obtainable by reacting: a) 10-40 pphwm methyl methacrylate monomer units; b) 5-50 pphwm of butyl acrylate monomer units; c) 15-40 pphwm of vinyl 2-ethyl hexanoate monomer units; d) 5-30 pphwm of vinyl benzoate monomer units and e) 1-10 pphwm of methacrylic acid or acrylic acid monomer units.
wherein said polymer composition is synthesized and composed so as to be suitable for sizing reinforcing fibers used in thermoplastic or thermosetting polymer composites.

Generally speaking, reinforcing fibers are sized with the inventive copolymers and embedded in a thermoplastic matrix resin or a thermosetting resin matrix as discussed hereinafter. While one thermoplastic matrix that fibers are embedded in suitably comprises a nylon or polyamide polymer, other matrix polymers can be used as well. Generally speaking, polyesters, copolyesters, polyamides, copolyamides and other polymers suitable for sheet, film or fiber forming can be used. The polyesters which may be used are generally obtained by known polymerization techniques from aliphatic or aromatic dicarboxylic acids with saturated aliphatic or aromatic diols. Preferred aromatic diacid monomers are the lower alkyl esters such as the dimethyl esters of terephthalic acid or isophthalic acid. Typical aliphatic dicarboxylic acids include adipic, sebacic, azelaic, dodecanedioic acid or 1,4-cyclohexanedicarboxylic acid. The preferred aromatic dicarboxylic acid or its ester or anhydride is esterified or trans-esterified and polycondensed with the saturated aliphatic or aromatic diol. Typical saturated aliphatic diols preferably include the lower alkane-diols such as ethylene glycol. Typical cycloaliphatic diols include 1,4-cyclohexane diol and 1,4-cyclohexane dimethanol. Typical aromatic diols include aromatic diols such as hydroquinone, resorcinol and the isomers of naphthalene diol (1,5-; 2,6-; and 2,7-). Various mixtures of aliphatic and aromatic dicarboxylic acids and saturated aliphatic and aromatic diols may also be used. Most typically, aromatic dicarboxylic acids are polymerized with aliphatic diols to produce polyesters, such as polyethylene terephthalate (terephthalic acid + ethylene glycol). Additionally, aromatic dicarboxylic acids can be polymerized with aromatic diols to produce wholly aromatic polyesters, such as polyphenylene terephthalate (terephthalic acid + hydroquinone). Some of these wholly aromatic polyesters form liquid crystalline phases in the melt and thus are referred to as "liquid crystal polyesters" or LCPs.

Also included are those polyesters containing A-B monomers. The polyesters described above are derived from what is known as A-A and B-B type monomers. That is, monomers that contain the same polymerizable group whether it is a diacid (terephthalic acid) or diol (ethylene glycol). However, polyesters can also be derived from what is known as A-B monomers, where there are two different polymerizable groups on each molecule. Examples of A-B monomers would include 4-hydroxy benzoic acid (HBA) and the various isomers of hydroxy naphthoic acid (HNA). These monomers could polymerize to form a homopolyester such as poly (HBA) or copolymerize with any A-A and/or B-B monomer.

Specific examples of polyesters include; polyethylene terephthalate; poly(1,4-butylene) terephthalate; and 1,4-cyclohexylene dimethylene terephthalate/isophthalate copolymer and other linear homopolymer esters derived from aromatic dicarboxylic acids, including isophthalic acid, bibenzoic acid, naphthalene-dicarboxylic acid including the 1,5-; 2,6-; and 2,7-naphthalene-dicarboxylic acids; 4,4,-diphenylene-dicarboxylic acid; bis(p-carboxyphenyl) methane acid; ethylene-bis-p-benzoic acid; 1,4-tetramethylene bis(p-oxybenzoic) acid; ethylene bis(p-oxybenzoic) acid; 1,3-trimethylene bis(p-oxybenzoic) acid; and 1,4-tetramethylene bis(p-oxybenzoic) acid, and diols selected from the group consisting of 2,2-dimethyl-1,3-propane diol; cyclohexane dimethanol and aliphatic glycols of the general formula HO(CH₂)ₙOH where n is an integer from 2 to 10, e.g., ethylene glycol; 1,4-tetramethylene glycol; 1,6-hexamethylene glycol; 1,8-octamethylene glycol; 1,10-decamethylene glycol; and 1,3-propylene glycol; and polyethylene glycols of the general formula HO(CH₂CH₂O)ₙH where n is an integer from 2 to 10,000, and aromatic diols such as hydroquinone, resorcinol and the isomers of naphthalene diol (1,5-; 2,6-; and 2,7). There can also be present one or more aliphatic dicarboxylic acids, such as adipic, sebacic, azelaic, dodecanedioic acid or 1,4-cyclohexanedicarboxylic acid.

Also included are polyester containing copolymers such as polyesteramides, polyesterimides, polyesteranhydrides, polyesterethers, polyesterketones.

Polyamide resins which may be useful in the practice of the invention are well-known in the art and include semi-crystalline and amorphous resins, which may be produced for example by condensation polymerization of equimolar amounts of saturated dicarboxylic acids containing from 4 to 12 carbon atoms with diamines, by ring opening polymerization of lactams, or by copolymerization of polyamides with other components, e.g. to form polyether polyamide block copolymers. Examples of polyamides include polyhexamethylene adipamide (nylon 66), polyhexamethylene azelaamide (nylon 69), polyhexamethylene sebacamide (nylon 610), polyhexamethylene dodecanoamide (nylon 612), polydodecamethylene dodecanoamide (nylon 1212), polycaprolactam (nylon 6), polylauric lactam, poly-11-aminoundecanoic acid, and copolymers of adipic acid, isophthalic acid, and hexamethylene diamine.

### Examples

The following examples are presented to further illustrate the present invention and should not be taken as limiting the invention, the spirit and scope of which is set forth in the appended claims. The parts and percentages indicated in the examples are by weight unless noted otherwise.

### Abbreviations:

V2EH: Vinyl 2-ethyl hexanoate monomer; stabilized with 20 ppm MEHQ, supplied by Japan VAM and Poval Co., Ltd.
VB: Vinyl benzoate; stabilized with 40 ppm MEHQ; supplied by Japan VAM and Poval Co., Ltd.
MMA: Methyl methacrylate.
BA: Butyl acrylate
MAA: Methacrylic acid.
VeoVa (or "VV"): Veova™ vinyl esters are esters of versatic acid supplied by Hexion Specialty Chemicals, Columbus, Ohio.

### Preparation of binder for Glass Fiber sizing to be used for polyamide reinforcement using Butyl Acrylate, Methyl Methacrylate, VeoVa™ 10, Vinyl Benzoate, Vinyl-2-ethylhexanoate and Methacrylic Acid as comonomers:

### Comp - Example 1 - FRTP Sizing:

An aqueous solution was prepared by the addition of 99.9 g of a 80% aqueous solution of an alcohol ethoxylate nonionic surfactant, (Emulan^{®} TO2080 from BASF), 32.0 g of a 30% aqueous solution of a disodium ethoxylated alcohol [C10-C12] half ester of sulfosuccinic acid anionic surfactant, (Aerosol^{®} A102 from Cytec) and 0.41 g of a 1% aqueous solution of ferrous ammonium sulfate, to 1058 g of deionized water while stirring. The aqueous solution was charged to a 3-liter reactor equipped with a stirrer and dosage pumps.

The reactor was heated to 40°C. 10% of a monomer mixture comprising 435.8 g methyl methacrylate, 284.2 g VeoVa™ 10,180 g n-butyl acrylate and 5.3 g methacrylic acid was pumped to the reactor. This was followed by the addition of 2.5 g sodium metabisulfite dissolved in 40.1 g deionized water. Then after 5 minutes, 5.7 g sodium persulfate dissolved in 40.1 g deionized water was added.

At maximum exotherm, the addition of the remaining 90% monomer mixture described above was commenced for 180 minutes and the addition of 1.1 g sodium metabisulfite dissolved in 160.3 g deionized water and 2.0 g sodium persulfate for 210 minutes in separate feeds while keeping the temperature of the reaction mixture at 60 °C. After completion of all additions, the reaction temperature was raised to 80 °C and kept at that temperature for 1 hour.

After the hold period, the reaction mixture was cooled to 50°C. A solution of 1.68 g of sodium metabisulfite in 16.0 g of deionized water was added and the reaction mixture stirred for another 15 minutes, followed by a solution of 2.49 g of t-butylhydroperoxide in 16.0 g of deionized water and kept for another 15 minutes. The mixture was cooled to below 30 °C, then 3.65 g of sodium acetate dissolved in 27.2 g deionized water was added and the resultant dispersion was filtered through a 180µ mesh. The resultant dispersion had a solids content of 39.0 %, viscosity of 23 mPa·s, pH of 2.9, grit, (measured on a 40 µ mesh), of 0.051 and a Tg, (onset, by DSC), of 31.0 °C.

### Example 2 - FRTP Sizing:

A similar procedure was followed except that the monomer mixture comprised 361.8 g of methyl methacrylate, 88.2 g n-butyl acrylate, 172.4 g vinyl benzoate, 277.7 g vinyl-2-ethylhexanoate and 47.4 g methacrylic acid. The resultant dispersion had a solids content of 39.0 %, viscosity of 18 mPa·s, pH of 2.8, grit, (measured on a 40 µ mesh), of 0.031 % and a Tg, (onset, by DSC), of 37.3 °C.

### Example 3 - FRTP Sizing:

A similar procedure was followed except that the monomer mixture comprised 88.2 g of methyl methacrylate, 361.8 g n-butyl acrylate, 172.4 g vinyl benzoate, 277.7 g vinyl-2-ethylhexanoate and 47.4 g methacrylic acid. The resultant dispersion had a solids content of 39.0 %, viscosity of 19 mPa·s, pH of 2.8, grit, (measured on a 40 µ mesh), of 0.21 % and a Tg, (onset, by DSC), of -7.1 °C.

**Table 1**

| | Comp. Example 1 | Example 2 | Example 3 |
|---|---|---|---|
| Methyl Methacrylate (%) | 46.0 | 38.2 | 9.3 |
| n-Butyl Acrylate (%) | 19.0 | 9.3 | 38.2 |
| Vinyl 2-ethylhexanoate (%) | 0.0 | 29.3 | 29.3 |
| Vinyl Benzoate (%) | 0.0 | 18.2 | 18.2 |
| VeoVa 10 (%) | 30.0 | 0.0 | 0.0 |
| Methacrylic Acid (%) | 5.0 | 5.0 | 5.0 |
| Tg (°C) (by DSC) | 31.0 | 37.3 | -7.1 |
| Brookfield RVT 20 rpm, (23 °C)(mPa·s) | 23 | 18 | 19 |
| Solids Content (%) | 39.0 | 39.0 | 37.5 |

### Glass Fiber Production

Glass fibers were made in accordance with EC11 50tex using the following technology parameters:

| | |
|---|---|
| Furnace temperature: | 1257°C |
| Speed of the sizing application roller: | 40 rpm |
| Winding speed: | 1250 m/min |

The fibers were spun using a Dietze & Schell direct roving winding equipment and then dried for 5 hours at 135°C.

### Sizing preparation

The following basic recipe was used to prepare the sizing:

| | |
|---|---|
| 4.5 wt. % | Sizing polymer (Examples 1-3, 40% solids) |
| 1.0 wt. % | Coupling agent 3-Aminopropyltriethoxysilane |
| 0.3 wt. % | non ionic surfactant Arcopal N100 |

The sizing (1000 g total weight) was prepared using the following procedure:
1. The amino silane was slowly added to 472g of deionized water and stirred for 30 minutes to assure a complete hydrolization of the material.
2. Arcopal N100 was dissolved in 200 g deionized water and then added to solution 1, from step 1.
3. The sizing polymer was diluted 1:1 with deionized water (45 g) and added to the combined solution of 1 and 2, from steps 1 and 2.
4. Another 225g of deionized water was added and the mixture stirred for another 10 minutes.
The sizing was roller applied to glass fiber strands directly after melting glass marbles in the furnace as described earlier. The glass fiber strands consist of glass fiber filaments with a diameter of 17 µm. The typical add-on (LOI) of the sizing on the glass fiber strands was 0.7%.

### Production of test specimens

The single glass fiber filaments were converted into rovings (2400 tex material) using a Dietze & Schell roving winder and compounded using an extruder (ZSK 30/41D, Werner & Pfleiderer GmbH). As matrices Ultramid A27 (PA66, BASF AG) and Ultramid B27 (PA6, BASF AG) were used. The compounding temperature was 255 °C for PA6 and 290 °C for PA66. The glass content in the test specimens was 30 wt%.

### Reference product

As reference sizing, polymer NeoRez 970 from DSM was used in the same concentration. The glass fibers and test specimens were prepared using the same methods; specified above.

The mechanical properties of the test specimens made were tested according to ISO175. The tests included tensile strength at failure and Charpy impact resistance measurements (see Tables 2 and 3). In addition, the color of the tests specimens were measured according to DIN 6174 (or ISO equivalent) (see Tables 2 and 3). Also, thermal stability, using TGA measurements, of binders themselves were assessed (see Table 4).

Results appear below.

**Table 2. Test results for PA6 test specimens**

| | Reference | Example 1 | Example 2 |
|---|---|---|---|
| Tensile strength at failure (MPa) | 172.0 | 171.5 | 167.3 |
| Tensile strength at failure after immersion in water for 168 hrs at 60 °C (MPa) | 115.2 | 114.9 | 112.1 |
| Charpy impact resistance (kJ/m²) | 98.3 | 78.5 | 91.0 |
| Charpy impact resistance after immersion in water for 168 hrs at 60 °C (kJ/m²) | 112.9 | 86.3 | 91.0 |
| Color (b-value) | 3.6 | 5.9 | -0.3 |

**Table 3. Test results for PA66 test specimens**

| | Reference | Example 1 | Example 2 |
|---|---|---|---|
| Tensile strength at failure (MPa) | 188.0 | 187.9 | 188.8 |
| Tensile strength at failure after immersion in water for 168 hrs at 60 °C (MPa) | 108.8 | 106.7 | 107.6 |
| Charpy impact resistance (kJ/m²) | 68.5 | 79.6 | 77.0 |
| Charpy impact resistance after immersion in water for 168 hrs at 60 °C (kJ/m²) | 92.3 | 100.6 | 90.0 |
| Color (b-value) | -2.1 | -3.6 | -3.7 |

**Table 4. Thermal stability test results of binders**

| | Reference | Example 1 | Example 2 |
|---|---|---|---|
| Weight loss 10 mins at 250 °C (%) | 12 | 8.9 | 9.2 |
| Weight loss 1 min at 380 °C (%) | 69 | 15.4 | 16.7 |

The invention compositions exhibited very similar performance with respect to mechanical properties and color (superior for example 2 with vinyl monomers), but were surprisingly superior with respect to performance in thermal stability as compared with the reference composition.

While the invention has been described in detail, modifications within the spirit and scope of the invention will be readily apparent to those of skill in the art. In view of the foregoing discussion, relevant knowledge in the art and references discussed above in connection with the Background and Detailed, further description is deemed unnecessary. In addition, it should be understood that aspects of the invention and portions of various embodiments may be combined or interchanged either in whole or in part. Furthermore, those of ordinary skill in the art will appreciate that the foregoing description is by way of illustration only, and is not intended to limit the invention.

## Claims

1. A reinforcing fiber for use in thermoplastic or thermosetting matrix resin sized with one or more copolymer composition(s) obtainable by reacting:
a) 5-90 pphwm of at least one alkyl methacrylate having a Tg of more than 40°C; and
b) 5-50 pphwm of at least one alkyl acrylate having a Tg of less than 0°C; and
c) 0.1-20 pphwm of at least one C₃-C₆ unsaturated carboxylic acid; and
d) at least one further comonomer selected from the group comprising:
(i) 5-50 pphwm of at least one vinyl ester of neoalkanoic acid, and
(ii) 10-60 pphwm of at least one vinyl ester of α-monosubstituted fatty acids, and
(iii) 5-50 pphwm of vinyl esters of an aromatic carboxylic acid, and
(iv) other comonomers.

2. The reinforcing fiber as claimed in Claim 1, wherein the further monomer d) is vinyl ester of neoalkanoic acid.

3. The reinforcing fiber as claimed in Claim 1, wherein further monomers d) are vinyl ester of α-monosubstituted fatty acids and vinyl esters of an aromatic carboxylic acid.

4. The reinforcing fiber as claimed in Claim 1, wherein the alkyl methacrylate is methyl methacrylate.

5. The reinforcing fiber as claimed in Claim 1, wherein the alkyl acrylate is butyl acrylate.

6. The reinforcing fiber as claimed in Claim 2, wherein the vinyl esters of neoalkanoic acid are of the structural formula: 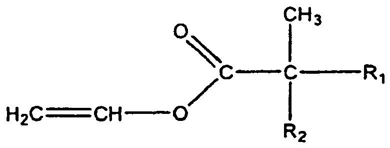 where R₁ and R₂ are alkyl groups which together may collectively contain from about 6-8 carbon atoms.

7. The reinforcing fiber as claimed in Claim 1, wherein the copolymer is obtainable by reacting: a) 20-80 pphwm of methyl methacrylate; b) 5-50 pphwm of butyl acrylate; c) 1-10 pphwm of methacrylic acid or acrylic acid; and d) 15-45 pphwm of vinyl esters of neoalkanoic acid.

8. The reinforcing fiber as claimed in Claim 1, wherein the copolymer is obtainable by reacting: a) 5-50 pphwm methyl methacrylate; b) 5-50 pphwm of butyl acrylate; c) 1-10 pphwm of methacrylic acid or acrylic acid; d) 15-40 pphwm of vinyl 2-ethyl hexanoate and 5-30 pphwm of vinyl benzoate.

9. The reinforcing fiber as claimed in Claim 1, wherein the reinforcing fiber is a glass fiber or other mineral fiber.

10. A polymer composite comprising a thermoplastic or thermosetting matrix resin and a reinforcing fiber sized with one or more copolymer composition(s) obtainable by reacting:
a) 5-90 pphwm of at least one alkyl methacrylate having a Tg of more than 40°C; and
b) 5-50 pphwm of at least one alkyl acrylate having a Tg of less than 0°C; and
c) 0.1-20 pphwm of at least one C₃-C₆ unsaturated carboxylic acid; and
d) at least one further comonomer selected from the group comprising:
(i) 5-50 pphwm of at least one vinyl ester of neoalkanoic acid, and
(ii) 10-60 pphwm of at least one vinyl ester of α-monosubstituted fatty acids, and
(iii) 5-50 pphwm of vinyl esters of an aromatic carboxylic acid, and
(iv) other comonomers.

11. The composite of Claim 10, wherein the reinforcing fiber is a glass fiber or other mineral fiber.

12. An emulsion copolymer composition obtainable by reacting:
a) 5-90 pphwm of at least one alkyl methacrylate having a Tg of more than 40°C; and
b) 5-50 pphwm of at least one alkyl acrylate having a Tg of less than 0°C; and
c) 0.1-20 pphwm of at least one C₃-C₆ unsaturated carboxylic acid; and
d) at least one further comonomer selected from the group comprising:
(i) 10-60 pphwm of at least one vinyl ester of α-monosubstituted fatty acids, and
(ii) 5-50 pphwm of vinyl esters of an aromatic carboxylic acid, and
(iii) other comonomers.
wherein said polymer composition is synthesized and composed so as to be suitable for sizing reinforcing fibers used in thermoplastic or thermosetting polymer composites.

13. The copolymer composition as claimed in Claim 12, wherein the α-monosubstituted fatty acid vinyl ester is vinyl 2-ethyl hexanoate.

14. The copolymer composition as claimed in Claim 12, wherein the carboxylic acid vinyl ester is vinyl benzoate.

15. The copolymer composition as claimed in Claim 12, obtainable by reacting:
a) 5-50 pphwm methyl methacrylate;
b) 5-50 pphwm of butyl acrylate;
c) 15-40 pphwm of vinyl 2-ethyl hexanoate;
d) 5-30 pphwm of vinyl benzoate; and
e) 0.5-10 pphwm of methacrylic acid or acrylic acid.
wherein said polymer composition is synthesized and composed so as to be suitable for sizing reinforcing fibers used in thermoplastic or thermosetting polymer composites.

## Patentansprüche

1. Verstärkungsfaser zur Verwendung in einem thermoplastischen oder duroplastischen Matrixharz, geschlichtet mit einer oder mehreren Copoly-merzusammensetzungen, erhältlich durch Umsetzen von:
a) 5-90 pphwm wenigstens eines Alkylmethacrylats mit einem Tg von mehr als 40 °C; und
b) 5-50 pphwm wenigstens eines Alkylacrylats mit einem Tg von weniger als 0 °C; und
c) 0,1-20 pphwm wenigstens einer ungesättigten C₃-C₆-Carbonsäure; und
d) wenigstens eines weiteren Comonomers, das aus der Gruppe ausgewählt ist, die Folgendes umfasst:
(i) 5-50 pphwm wenigstens eines Vinylesters einer Neoalkansäure; und
(ii) 10-60 pphwm wenigstens eines Vinylesters von α-monosubstituierten Fettsäuren; und
(iii) 5-50 pphwm Vinylester einer aromatischen Carbonsäure; und
(iv) andere Comonomere.

2. Verstärkungsfaser gemäß Anspruch 1, wobei das weitere Monomer d) ein Vinylester einer Neoalkansäure ist.

3. Verstärkungsfaser gemäß Anspruch 1, wobei es sich bei den weiteren Monomeren d) um einen Vinylester von α-monosubstituierten Fettsäuren und Vinylester einer aromatischen Carbonsäure handelt.

4. Verstärkungsfaser gemäß Anspruch 1, wobei es sich bei dem Alkylmethacrylat um Methylmethacrylat handelt.

5. Verstärkungsfaser gemäß Anspruch 1, wobei es sich bei dem Alkylacrylat um Butylacrylat handelt.

6. Verstärkungsfaser gemäß Anspruch 2, wobei die Vinylester der Neoalkansäure die Strukturformel 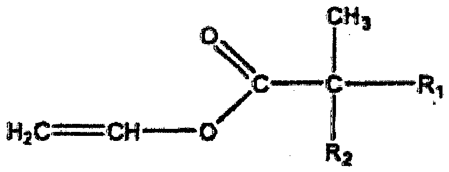 aufweisen, wobei R₁ und R₂ Alkylgruppen sind, die zusammen etwa 6-8 Kohlenstoffatome enthalten können.

7. Verstärkungsfaser gemäß Anspruch 1, wobei das Copolymer erhältlich ist durch Umsetzen von: a) 20-80 pphwm Methylmethacrylat; b) 5-50 pphwm Butylacrylat; c) 1-10 pphwm Methacrylsäure oder Acrylsäure; und d) 15-45 pphwm Vinylester von Neoalkansäure.

8. Verstärkungsfaser gemäß Anspruch 1, wobei das Copolymer erhältlich ist durch Umsetzen von: a) 5-50 pphwm Methylmethacrylat; b) 5-50 pphwm Butylacrylat; c) 1-10 pphwm Methacrylsäure oder Acrylsäure; d) 15-40 pphwm Vinyl-2-ethylhexanoat und 5-30 pphwm Vinylbenzoat.

9. Verstärkungsfaser gemäß Anspruch 1, wobei die Verstärkungsfaser eine Glasfaser oder andere Mineralfaser ist.

10. Polymerverbundstoff, der ein thermoplastisches oder duroplastisches Matrixharz und eine Verstärkungsfaser umfasst, die mit einer oder mehreren Copolymerzusammensetzungen geschlichtet ist, erhältlich durch Umsetzen von:
a) 5-90 pphwm wenigstens eines Alkylmethacrylats mit einem Tg von mehr als 40 °C; und
b) 5-50 pphwm wenigstens eines Alkylacrylats mit einem Tg von weniger als 0 °C; und
c) 0,1-20 pphwm wenigstens einer ungesättigten C₃-C₆-Carbonsäure; und
d) wenigstens eines weiteren Comonomers, das aus der Gruppe ausgewählt ist, die Folgendes umfasst:
(i) 5-50 pphwm wenigstens eines Vinylesters einer Neoalkansäure; und
(ii) 10-60 pphwm wenigstens eines Vinylesters von α-monosubstituierten Fettsäuren; und
(iii) 5-50 pphwm Vinylester einer aromatischen Carbonsäure; und
(iv) andere Comonomere.

11. Verbundstoff gemäß Anspruch 10, wobei die Verstärkungsfaser eine Glasfaser oder andere Mineralfaser ist.

12. Emulsionscopolymerzusammensetzung, erhältlich durch Umsetzen von:
a) 5-90 pphwm wenigstens eines Alkylmethacrylats mit einem Tg von mehr als 40 °C; und
b) 5-50 pphwm wenigstens eines Alkylacrylats mit einem Tg von weniger als 0 °C; und
c) 0,1-20 pphwm wenigstens einer ungesättigten C₃-C₆-Carbonsäure; und
d) wenigstens eines weiteren Comonomers, das aus der Gruppe ausgewählt ist, die Folgendes umfasst:
(i) 10-60 pphwm wenigstens eines Vinylesters von α-monosubstituierten Fettsäuren; und
(ii) 5-50 pphwm Vinylester einer aromatischen Carbonsäure; und
(iii) andere Comonomere;
wobei die Polymerzusammensetzung so synthetisiert und zusammengesetzt ist, dass die zum Schlichten von Verstärkungsfasern, die in thermoplastischen oder duroplastischen Polymerverbundstoffen verwendet werden, geeignet ist.

13. Copolymerzusammensetzung gemäß Anspruch 12, wobei es sich bei dem Vinylester der α-monosubstituierten Fettsäure um Vinyl-2-ethylhexanoat handelt.

14. Copolymerzusammensetzung gemäß Anspruch 12, wobei es sich bei dem Vinylester der Carbonsäure um Vinylbenzoat handelt.

15. Copolymerzusammensetzung gemäß Anspruch 12, erhältlich durch Umsetzen von:
a) 5-50 pphwm Methylmethacrylat;
b) 5-50 pphwm Butylacrylat;
c) 15-40 pphwm Vinyl-2-ethylhexanoat;
d) 5-30 pphwm Vinylbenzoat; und
e) 0,5-10 pphwm Methacrylsäure oder Acrylsäure.
wobei die Polymerzusammensetzung so synthetisiert und zusammengesetzt ist, dass diese zum Schlichten von Verstärkungsfasern, die in thermoplastischen oder duroplastischen Polymerverbundstoffen verwendet werden, geeignet ist.

## Revendications

1. Fibre de renforcement destinée à être utilisée dans une résine d'enrobage thermoplastique ou thermodurcissable, apprêtée avec une ou plusieurs compositions de copolymère pouvant être obtenues par la réaction de :
a) 5-90 pphwm d'au moins un méthacrylate d'alkyle ayant une Tg de plus de 40 °C ; et
b) 5-50 pphwm d'au moins un acrylate d'alkyle ayant une Tg de moins de 0 °C ; et
c) 0,1-20 pphwm d'au moins un acide carboxylique insaturé en C₃-C₆ ; et
d) au moins un autre comonomère choisi dans le groupe comprenant :
(i) 5-50 pphwm d'au moins un ester vinylique d'un acide néoalkanoïque, et
(ii) 10-60 pphwm d'au moins un ester vinylique d'acides gras αmonosubstitués, et
(iii) 5-50 pphwm d'esters vinyliques d'un acide carboxylique aromatique, et
(iv) d'autres comonomères.

2. Fibre de renforcement selon la revendication 1, dans laquelle ledit autre monomère d) est un ester vinylique d'un acide néoalkanoïque.

3. Fibre de renforcement selon la revendication 1, dans laquelle d'autres monomères d) sont un ester vinylique d'acides gras α-monosubstitués et des esters vinyliques d'un acide carboxylique aromatique.

4. Fibre de renforcement selon la revendication 1, dans laquelle ledit méthacrylate d'alkyle est le méthacrylate de méthyle.

5. Fibre de renforcement selon la revendication 1, dans laquelle ledit acrylate d'alkyle est l'acrylate de butyle.

6. Fibre de renforcement selon la revendication 2, dans laquelle lesdits esters vinyliques d'un acide néoalkanoïque présentent la formule structurelle : 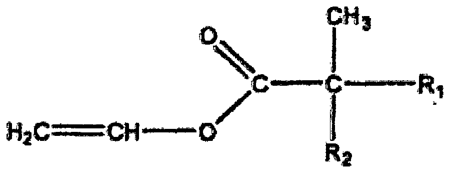 où R₁ et R₂ sont des groupes alkyle qui peuvent contenir ensemble collectivement environ 6-8 atomes de carbone.

7. Fibre de renforcement selon la revendication 1, dans laquelle ledit copolymère peut être obtenu par la réaction de : a) 20-80 pphwm de méthacrylate de méthyle, b) 5-50 pphwm d'acrylate de butyle, c) 1-10 pphwm d'acide méthacrylique ou d'acide acrylique, et d) 15-45 pphwm d'esters vinyliques d'un acide néoalkanoïque.

8. Fibre de renforcement selon la revendication 1, dans laquelle ledit copolymère peut être obtenu par la réaction de : a) 5-50 pphwm de méthacrylate de méthyle, b) 5-50 pphwm d'acrylate de butyle, c) 1-10 pphwm d'acide méthacrylique ou d'acide acrylique, d) 15-40 pphwm de 2-éthylhexanoate de vinyle, et 5-30 pphwm de benzoate de vinyle.

9. Fibre de renforcement selon la revendication 1, dans laquelle ladite fibre de renforcement est une fibre de verre ou une autre fibre minérale.

10. Composite polymère comprenant une résine d'enrobage thermoplastique ou thermodurcissable et une fibre de renforcement apprêtée avec une ou plusieurs compositions de copolymère pouvant être obtenues par la réaction de :
a) 5-90 pphwm d'au moins un méthacrylate d'alkyle ayant une Tg de plus de 40 °C ; et
b) 5-50 pphwm d'au moins un acrylate d'alkyle ayant une Tg de moins de 0 °C ; et
c) 0,1-20 pphwm d'au moins un acide carboxylique insaturé en C₃-C₆ ; et
d) au moins un autre comonomère choisi dans le groupe comprenant :
(i) 5-50 pphwm d'au moins un ester vinylique d'un acide néoalkanoïque, et
(ii) 10-60 pphwm d'au moins un ester vinylique d'acides gras αmonosubstitués, et
(iii) 5-50 pphwm d'esters vinyliques d'un acide carboxylique aromatique, et
(iv) d'autres comonomères.

11. Composite selon la revendication 10, dans lequel ladite fibre de renforcement est une fibre de verre ou une autre fibre minérale.

12. Composition de copolymère en émulsion pouvant être obtenue par la réaction de :
a) 5-90 pphwm d'au moins un méthacrylate d'alkyle ayant une Tg de plus de 40 °C ; et
b) 5-50 pphwm d'au moins un acrylate d'alkyle ayant une Tg de moins de 0 °C ; et
c) 0,1-20 pphwm d'au moins un acide carboxylique insaturé en C₃-C₆ ; et
d) au moins un autre comonomère choisi dans le groupe comprenant :
(i) 10-60 pphwm d'au moins un ester vinylique d'acides gras α-monosubstitués, et
(ii) 5-50 pphwm d'esters vinyliques d'un acide carboxylique aromatique, et
(iii) d'autres comonomères ;
dans laquelle ladite composition de polymère est synthétisée et composée de manière à être adaptée à l'apprêtage des fibres de renforcement utilisées dans des composites polymères thermoplastiques ou thermodurcissables.

13. Composition de copolymère selon la revendication 12, dans laquelle ledit ester vinylique d'un acide gras α-monosubstitué est le 2-éthylhexanoate de vinyle.

14. Composition de copolymère selon la revendication 12, dans laquelle ledit ester vinylique d'un acide carboxylique est le benzoate de vinyle.

15. Composition de copolymère selon la revendication 12, pouvant être obtenue par la réaction de :
a) 5-50 pphwm de méthacrylate de méthyle ;
b) 5-50 pphwm d'acrylate de butyle ;
c) 15-40 pphwm de 2-éthylhexanoate de vinyle ;
d) 5-30 pphwm de benzoate de vinyle ; et
e) 0,5-10 pphwm d'acide méthacrylique ou d'acide acrylique ;
dans laquelle ladite composition de polymère est synthétisée et composée de manière à être adaptée à l'apprêtage des fibres de renforcement utilisées dans des composites polymères thermoplastiques ou thermodurcissables.
